# EUROPEAN PATENT APPLICATION

(11) **EP 3 315 374 A1**
(43) Date of publication of application: **02.05.2018**
(21) Application number: 17193244.5
(22) Date of filing: 26.09.2017
(51) Int. Cl.: B60W 30/18, B60W 50/08, B60K 17/34, B60K 23/04, B60W 10/02, B60W 10/06, F16H 37/04

(54) **CONTROL DEVICE FOR VEHICLE**

(30) Priority: 18.10.2016 JP 2016204360
(71) Applicant: TOYOTA JIDOSHA KABUSHIKI KAISHA, Toyota-shi, Aichi-ken, 471-8571 (JP)
(72) Inventor: INATA, Kazunari, TOYOTA-SHI, AICHI-KEN, 471-8571 (JP); ICHIKAWA, Akihiko, TOYOTA-SHI, AICHI-KEN, 471-8571 (JP); MURAOKA, Junichi, TOYOTA-SHI, AICHI-KEN, 471-8571 (JP); OHKI, Takao, TOYOTA-SHI, AICHI-KEN, 471-8571 (JP)
(74) Representative: Intès, Didier Gérard André

(57) **Abstract**

A control device for a vehicle is provided. The vehicle includes a connection and disconnection unit (2), a mode switching operator (301, 303; 105; 106) and electronic control unit (100; 200; 300). The electronic control unit (100; 200; 300) is configured to execute at least one of a coasting termination control and a coasting non-execution control, the coasting termination control terminating a coasting when the mode switching operator (301, 303; 105; 106) is operated to select a first mode having higher travel performance than a second mode during the coasting performed by establishment of the coasting initiation condition, and the coasting non-execution control not executing the coasting when a coasting initiation condition is established after the mode switching operator (301, 303; 105; 106) is operated to change the travel mode to the first mode.

## Description

### BACKGROUND OF THE INVENTION

### 1. Field of the Invention

The invention relates to a control device for a vehicle. Particularly, the invention relates to a control device applied to a vehicle that enables coasting in which a connection and disconnection unit disposed on a power transmission path between a drive power source and drive wheels is disengaged.

### 2. Description of Related Art

In the related art, an automatic clutch that automatically engages and disengages by a clutch actuator is known as a clutch device disposed on a power transmission path between an engine and a manual shift device, as disclosed in Japanese Unexamined Patent Application Publication No. 2012-30707 (JP 2012-30707 A).

In JP 2012-30707 A, performing coasting by disengaging the automatic clutch when a coasting initiation condition is established during travel of a vehicle equipped with the automatic clutch is disclosed. Such a travel state is generally referred to as free running. The free running does not generate braking power from engine drag (so-called engine braking) and thus can increase the distance of coasting and improve the fuel consumption rate of the engine.

Also known is a vehicle that enables a driver to manually select one of a plurality of travel modes having different levels of travel performance (rough road travel performance, travel stability performance, or response performance with respect to driving of the driver). For example, in Japanese Unexamined Patent Application Publication No. 2016-153274 (JP 2016-153274 A), a vehicle including a mode switching operator with which one of a two-wheel drive mode performing two-wheel drive travel and a four-wheel drive mode performing four-wheel drive travel is selected, is disclosed. In the vehicle, the two-wheel drive mode or the four-wheel drive mode can be selected by manually operating the mode switching operator.

### SUMMARY OF THE INVENTION

Power from an engine is not transmitted to wheels during execution of free running. Thus, even when a driver requesting high travel performance (high rough road travel performance, high travel stability performance, or high response performance with respect to driving of the driver) selects a travel mode, the request may not be satisfied. For example, even when the four-wheel drive mode is selected in the vehicle enabling the driver to manually select one of the two-wheel drive mode and the four-wheel drive mode as described above, that is, even when the driver requests high rough road travel performance, the request may not be satisfied in free running. That is, drivability deteriorates due to execution of free running.

The invention provides a control device for a vehicle that enables free running (coasting), the control device enabling acquisition of favorable drivability.

An aspect of the invention relates to a control device for a vehicle. The vehicle includes a connection and disconnection unit that is disposed on a power transmission path between a drive power source and drive wheels. The connection and disconnection unit is configured to switch between an engaged state and a disengaged state by operation of actuators. Transmission of power on the power transmission path is executed in the engaged state. Transmission of power on the power transmission path is blocked in the disengaged state. The vehicle includes a mode switching operator that is operable by a driver. The mode switching operator is configured to select one travel mode of a plurality of travel modes including a first mode and a second mode having different levels of travel performance. The control device includes: an electronic control unit that is configured to control the actuators to execute coasting in which the connection and disconnection unit is placed into the disengaged state, when a predetermined coasting initiation condition is established, and execute at least one of a coasting termination control and a coasting non-execution control, the coasting termination control terminating the coasting when the mode switching operator is operated to select the first mode having higher travel performance than the second mode during the coasting performed by establishment of the coasting initiation condition, and the coasting non-execution control not executing the coasting when the coasting initiation condition is established after the mode switching operator is operated to change the travel mode to the first mode.

By the specific matter, a coasting preventing unit performs at least one of the coasting termination control and the coasting non-execution control, the coasting termination control terminating the coasting when the mode switching operator is operated to select the first mode during the coasting performed by establishment of the coasting initiation condition, and the coasting non-execution control not executing the coasting when the coasting initiation condition is established after the mode switching operator is operated to change the travel mode to the first mode. Thus, coasting is prevented during travel in the first mode, and the driver can acquire high travel performance (high rough road travel performance, high travel stability performance, or high response performance with respect to driving of the driver) requested and acquire more favorable drivability than in the related art (performing coasting by establishment of the coasting initiation condition even in a travel mode having high travel performance).

In the aspect, the vehicle may include a drive wheel switching mechanism disposed on the power transmission path. the drive wheel switching mechanism is configured to switch between four-wheel drive travel and two-wheel drive travel. The travel modes may include a four-wheel drive mode performing the four-wheel drive travel and a two-wheel drive mode performing the two-wheel drive travel. The first mode may be the four-wheel drive mode, and the second mode may be the two-wheel drive mode.

The four-wheel drive mode has higher rough road travel performance as travel performance than the two-wheel drive mode. When the driver requesting high rough road travel performance selects the four-wheel drive mode by operating the mode switching operator during coasting performed by establishment of the coasting initiation condition, the coasting is terminated (coasting termination control). When the driver requesting high rough road travel performance selects the four-wheel drive mode by operating the mode switching operator, coasting is not executed even with establishment of the coasting initiation condition (coasting non-execution control). Thus, coasting is prevented during travel in the four-wheel drive mode, and high rough road travel performance requested by the driver can be secured. Consequently, favorable drivability can be acquired.

In the aspect, the vehicle may include a sub shift mechanism disposed on the power transmission path of the vehicle. The sub shift mechanism is configured to shift in two stages of a low-speed stage and a high-speed stage so as to change a gear ratio of rotation transmitted from the drive power source toward the drive wheels. The travel modes may include a low-speed mode placing the sub shift mechanism into the low-speed stage and a high-speed mode placing the sub shift mechanism into the high-speed stage. The first mode may be the low-speed mode, and the second mode may be the high-speed mode.

The low-speed mode of the sub shift mechanism has higher rough road travel performance as travel performance than the high-speed mode. When the driver requesting high rough road travel performance selects the low-speed mode by operating the mode switching operator during coasting performed by establishment of the coasting initiation condition, the coasting is terminated (coasting termination control). When the driver requesting high rough road travel performance selects the low-speed mode by operating the mode switching operator, coasting is not executed even with establishment of the coasting initiation condition (coasting non-execution control). Thus, coasting is prevented during travel in the low-speed mode, and high rough road travel performance requested by the driver can be secured. Consequently, favorable drivability can be acquired.

In the aspect, the vehicle may include a differential device disposed on the power transmission path of the vehicle. The differential device may include a differential lock mechanism. The travel modes may include a differential lock ON mode of locking differential mechanism of the differential device and a differential lock OFF mode of unlocking the differential lock mechanism of the differential device. The first mode may be the differential lock ON mode, and the second mode may be the differential lock OFF mode.

The differential lock ON mode of the differential devices has higher travel stability performance as travel performance than the differential lock OFF mode. When the driver requesting high travel stability performance selects the differential lock ON mode by operating the mode switching operator during coasting performed by establishment of the coasting initiation condition, the coasting is terminated (coasting termination control). When the driver requesting high travel stability performance selects the differential lock ON mode by operating the mode switching operator, coasting is not executed even with establishment of the coasting initiation condition (coasting non-execution control). Thus, coasting is prevented during travel in the differential lock ON mode, and high travel stability performance requested by the driver can be secured. Consequently, favorable drivability can be acquired.

In the aspect, the travel modes may include at least a power mode and an eco mode, the first mode may be the power mode that prioritizes output of the drive power source more than the eco mode, and the second mode may be the eco mode that prioritizes energy efficiency of the drive power source more than the power mode.

The power mode has higher response performance as travel performance with respect to driving of the driver than the eco mode. When the driver requesting high response performance selects the power mode by operating the mode switching operator during coasting performed by establishment of the coasting initiation condition, the coasting is terminated (coasting termination control). When the driver requesting high response performance selects the power mode by operating the mode switching operator, coasting is not executed even with establishment of the coasting initiation condition (coasting non-execution control). Thus, coasting is prevented during travel in the.power mode, and high response performance requested by the driver can be secured. Consequently, favorable drivability can be acquired.

In the aspect, the drive power source may be an internal combustion engine. The travel modes may include a stop-start ON mode of stopping the internal combustion engine by a stoppage of the vehicle and a stop-start OFF mode of not stopping the internal combustion engine even with a stoppage of the vehicle. The first mode may be the stop-start OFF mode, and the second mode may be the stop-start ON mode.

When the driver selects the stop-start OFF mode by operating the mode switching operator, the driver requests the vehicle to exhibit high acceleration response performance. In this case, the driver is assumed to request high response performance with respect to driving during travel. Thus, when the stop-start OFF mode is selected by operating the mode switching operator during coasting performed by establishment of the coasting initiation condition, the coasting is terminated (coasting termination control). When the stop-start OFF mode is selected by operating the mode switching operator, coasting is not executed even with establishment of the coasting initiation condition (coasting non-execution control). Accordingly, coasting is prevented during travel in the stop-start OFF mode, and high response performance requested by the driver can be secured. Consequently, favorable drivability can be acquired.

The invention prevents coasting when the travel mode that the driver selects by operating the mode switching operator is a travel mode having high travel performance. Accordingly, the driver can acquire high travel performance requested and acquire favorable drivability.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram illustrating a schematic configuration of a powertrain and a control system of a vehicle in a first embodiment;
FIG. 2 is a skeletal diagram of a transfer in the first embodiment;
FIG. 3 is a sectional view illustrating a rear differential device in the first embodiment;
FIG. 4 is a block diagram illustrating a configuration of a control system related to each electronic control unit (ECU) in the first embodiment;
FIG. 5 is a flowchart illustrating a procedure of a free running control in the first embodiment;
FIG. 6 is a flowchart illustrating a procedure of a free running control in a second embodiment;
FIG. 7 is a block diagram illustrating a configuration of a control system related to an engine ECU and a clutch ECU in a third embodiment;
FIG. 8 is a diagram illustrating one example of a relationship between an accelerator operation amount and a requested torque for each selected travel mode;
FIG. 9 is a flowchart illustrating a procedure of a free running control in the third embodiment;
FIG. 10 is a block diagram illustrating a configuration of a control system related to an engine ECU and a clutch ECU in a fourth embodiment; and
FIG. 11 is a flowchart illustrating a procedure of a free running control in the fourth embodiment.

### DETAILED DESCRIPTION OF EMBODIMENTS

### First Embodiment

Hereinafter, a first embodiment of the invention will be described based on the drawings. The first embodiment describes a case of applying the invention to a part-time four-wheel drive car that is based on a front-engine rear-drive (FR) vehicle.

### Configuration of Powertrain

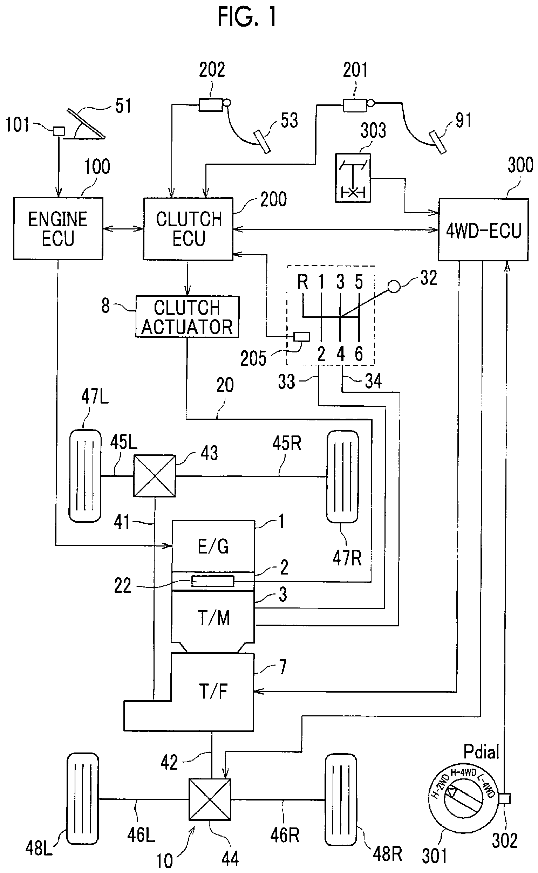

FIG. 1 is a diagram illustrating a schematic configuration of a powertrain and a control system of a vehicle in the first embodiment. As illustrated in FIG. 1, the vehicle according to the first embodiment includes an engine 1 as a drive power source for travel and a power transmission device 10 that can transmit power from the engine 1 to front wheels 47L, 47R and rear wheels 48L, 48R.

The power transmission device 10 includes an automatic clutch 2 as a connection and disconnection unit referred in the invention, a shift device (manual shift device) 3, a transfer 7 that can distribute power transmitted through the shift device 3 to the front wheels 47L, 47R side and the rear wheels 48L, 48R side, a front propeller shaft 41, a rear propeller shaft 42, a front differential device 43, a rear differential device 44, front wheel axles 45L, 45R, and rear wheel axles 46L, 46R.

The power transmission device 10, in a two-wheel drive state (a travel state with the rear wheels 48L, 48R as drive wheels), transmits power from the engine 1 to the rear wheels 48L, 48R through the automatic clutch 2, the shift device 3, the transfer 7, the rear propeller shaft 42, the rear differential device 44, and the rear wheel axles 46L, 46R. In a four-wheel drive state (a travel state with the rear wheels 48L, 48R and the front wheels 47L, 47R as drive wheels), power that is distributed by the transfer 7 is transmitted to the front wheels 47L, 47R through the front propeller shaft 41, the front differential device 43, and the front wheel axles 45L, 45R, in addition to the power transmission in the two-wheel drive state (power transmission to the rear wheels 48L, 48R).

### Engine

The engine 1 is a gasoline engine that generates drive power by combustion of fuel in cylinders. The engine 1 is controlled by an engine ECU 100.

### Automatic Clutch

The automatic clutch 2 includes a known concentric slave cylinder 22 (hereinafter, referred to as a CSC 22) and operates in response to hydraulic pressure supplied from a clutch hydraulic path 20 to adjust an engaged state.

Specifically, a clutch actuator 8 operates in accordance with a clutch control signal from a clutch ECU 200 to control the hydraulic pressure supplied from the clutch hydraulic path 20 to a hydraulic chamber of the CSC 22. The clutch actuator 8 includes an electric motor, a decelerating mechanism, a clutch master cylinder, and the like not illustrated and is configured to adjust, by operation of the electric motor, hydraulic pressure generated in the clutch master cylinder.

When a clutch disengaging instruction signal as the clutch control signal is output from the clutch ECU 200 in a state where the automatic clutch 2 is engaged, hydraulic pressure is supplied from the clutch hydraulic path 20 by operation of the clutch actuator 8 to the CSC 22, and the CSC 22 operates (a release bearing included in the CSC 22 proceeds) to disengage the automatic clutch 2.

Meanwhile, when a clutch engaging instruction signal as the clutch control signal is output from the clutch ECU 200, supply of hydraulic pressure from the clutch hydraulic path 20 is stopped by operation of the clutch actuator 8, and the CSC 22 operates (the release bearing included in the CSC 22 recedes) to engage the automatic clutch 2. A configuration that switches between the engaged state and the disengaged state of the automatic clutch 2 is known and will not be described.

A clutch system in the first embodiment is configured as a so-called clutch-by-wire system in which the clutch actuator 8 operates in accordance with the clutch control signal from the clutch ECU 200 to operate the automatic clutch 2 between the engaged state and the disengaged state. That is, the automatic clutch 2 is configured as a "connection and disconnection unit that is disposed on a power transmission path between a drive power source and drive wheels and enables, by operation of an actuator, switching between an engaged state enabling transmission of power on the power transmission path and a disengaged state blocking transmission of power" referred in the invention.

Examples of the form of output of the clutch control signal from the clutch ECU 200 include output of the clutch control signal in accordance with the driver operating a clutch pedal 91 and output of the clutch control signal without the driver operating the clutch pedal 91. That is, the clutch control signal may be output from the clutch ECU 200 in accordance with an output signal from a clutch pedal stroke sensor 201 described below after the clutch pedal stroke sensor 201 detects the operation amount of the clutch pedal 91 by the driver (the amount of stepping on the clutch pedal 91 from a state where the clutch pedal 91 is not operated (the operation amount is "zero")), or the clutch control signal may be output from the clutch ECU 200 even with the driver not operating the clutch pedal 91, as in free running described below (a state of travel of a vehicle with power transmission between the engine 1 and the shift device 3 blocked).

The shift device 3 is a known manual shift device (manual transmission) and is a constant mesh parallel gear mechanism that has a synchromesh mechanism and can establish, for example, six forward gear stages and a reverse gear stage. In the shift device 3, operation power from the driver operating a shift lever 32 operates a predetermined synchromesh mechanism (not illustrated) through a selector cable 33 and a shift cable 34, thereby establishing a predetermined gear stage (one gear stage of the six forward gear stages and the reverse gear stage).

In the shift device 3, the operation power to the shift lever 32 may be transmitted to the synchromesh mechanism through a fork shaft and a shift fork. In addition, the shift device 3 may be a so-called automatic manual transmission (AMT). In this case, the control system includes an ECT-ECU, and the actuator (a selector actuator and a shift actuator) operates to establish a desired gear stage in accordance with a shift control signal that is output from the ECT-ECU by the driver operating a shift lever.

### Transfer

The transfer 7 switches between the two-wheel drive state of transmitting power from the engine 1 to the rear wheels 48L, 48R and the four-wheel drive state of distributing the power to the front wheels 47L, 47R and the rear wheels 48L, 48R. In addition, the transfer 7 functions as a sub shift mechanism that shifts rotation transmitted through the shift device 3 by establishment of any of a high-speed stage H and a low-speed stage L.

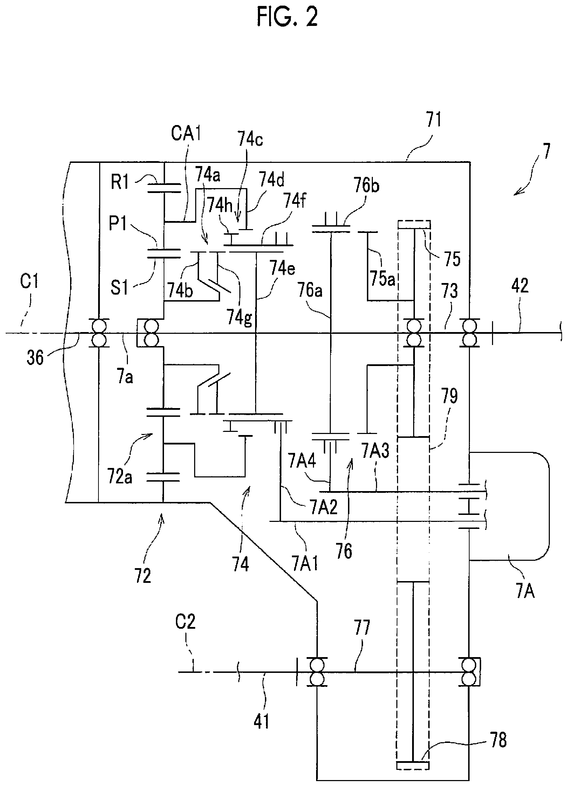

Specifically, as illustrated in FIG. 2 (a skeletal diagram of the transfer 7), a sub shift mechanism 72 mainly configured with a planetary gear device 72a, a first output shaft 73 connected to the rear propeller shaft 42, a first mesh clutch device 74 that is disposed between the sub shift mechanism 72 and the first output shaft 73 and selectively establishes the low-speed stage L or the high-speed stage H, a drive sprocket 75 disposed in such a manner that allowing and preventing rotation thereof relative to the first output shaft 73 are selectively switched, and a second mesh clutch device (2WD/4WD switching device) 76 that selectively switches between allowing and preventing rotation of the drive sprocket 75 relative to the first output shaft 73 are disposed on an axial center C1 in a transfer case 71 of the transfer 7.

A second output shaft 77 connected to the front propeller shaft 41 and a driven sprocket 78 disposed to be non-rotatable relative to the second output shaft 77 are disposed on an axial center C2 in the transfer case 71. A chain (or a belt or the like) 79 is wound between the drive sprocket 75 and the driven sprocket 78.

The transfer 7 transmits, to the first output shaft 73 through the sub shift mechanism 72, rotation of an input shaft 7a that is connected to an output shaft 36 of the shift device 3. A state where rotation of the drive sprocket 75 relative to the first output shaft 73 is allowed is the two-wheel drive state where power is not transmitted from the first output shaft 73 to the second output shaft 77. Meanwhile, a state where rotation of the drive sprocket 75 relative to the first output shaft 73 is prevented is the four-wheel drive state where power is transmitted from the first output shaft 73 to the second output shaft 77 through the drive sprocket 75, the chain 79, and the driven sprocket 78.

The planetary gear device 72a of the sub shift mechanism 72 has a sun gear S1 connected to the input shaft 7a, a ring gear R1 non-rotatably connected to the transfer case 71, and a carrier CA1 that supports a plurality of pinion gears P1 in a manner allowing rotation and revolution thereof, the pinion gears P1 meshing with the sun gear S1 and the ring gear R1. With this configuration, the rotational speed of the carrier CA1 is decreased with respect to the rotational speed of the input shaft 7a. A clutch gear 74b of a synchromesh mechanism 74a included in the first mesh clutch device 74 is fixed to the sun gear S1. A clutch gear 74d of a mesh clutch 74c included in the first mesh clutch device 74 is fixed to the carrier CA1.

The synchromesh mechanism 74a includes a clutch hub 74e splined to the first output shaft 73 in a non-rotatable manner relative to the first output shaft 73, a cylindrical sleeve 74f disposed to be non-rotatable relative to the clutch hub 74e and movable in the direction of the axial center by being splined to the clutch hub 74e, the clutch gear 74b, and a synchronizer ring 74g that synchronizes rotation of the sleeve 74f with rotation of the clutch gear 74b.

The sleeve 74f is moved in the direction of the axial center by a shift actuator 7A (for example, an electric motor). Specifically, a first shift fork shaft 7A1 as an output member is attached to the shift actuator 7A, and a first shift fork 7A2 is fixed to the tip end portion of the first shift fork shaft 7A1. The first shift fork shaft 7A1 is moved in the direction of the axial center by driving of the shift actuator 7A, thereby moving the sleeve 74f in the direction of the axial center through the first shift fork 7A2. The shift actuator 7A operates in accordance with a control signal from a 4WD-ECU 300 (refer to FIG. 1).

The mesh clutch 74c has the sleeve 74f and the clutch gear 74d. The clutch gear 74d has inner circumferential teeth that can mesh with outer circumferential teeth 74h disposed on the outer circumferential surface of the sleeve 74f.

In the first mesh clutch device 74, driving of the shift actuator 7A moves the sleeve 74f in the direction of the axial center, and the sleeve 74f meshes with the clutch gear 74b, thereby establishing the high-speed stage H in the sub shift mechanism 72. Meanwhile, the sleeve 74f moves in the direction of the axial center, and the sleeve 74f meshes with the clutch gear 74d, thereby establishing the low-speed stage L in the sub shift mechanism 72.

The second mesh clutch device 76 is a 2WD/4WD switching device (a drive wheel switching mechanism referred in the invention) that is, for example, a known dog clutch. Specifically, the second mesh clutch device 76 includes a clutch hub 76a splined to the first output shaft 73 in a non-rotatable manner relative to the first output shaft 73, a cylindrical sleeve 76b disposed to be non-rotatable relative to the clutch hub 76a and movable in the direction of the axial center by being splined to the clutch hub 76a, and a clutch gear 75a fixed to the drive sprocket 75. The clutch gear 75a has outer circumferential teeth that can mesh with inner circumferential teeth on the inner circumferential surface of the sleeve 76b. The sleeve 76b can move between a position in which the drive sprocket 75 can rotate relative to the first output shaft 73 and a position in which the drive sprocket 75 cannot rotate relative to the first output shaft 73. The sleeve 76b is moved in the direction of the axial center by the shift actuator 7A. Specifically, a second shift fork shaft 7A3 as an output member that extends in a parallel direction to the direction of the axial center is attached to the shift actuator 7A, and a second shift fork 7A4 is fixed to the tip end portion of the second shift fork shaft 7A3. The second shift fork shaft 7A3 is moved in the direction of the axial center by driving of the shift actuator 7A, thereby moving the sleeve 76b in the direction of the axial center through the second shift fork 7A4.

In the second mesh clutch device 76, the sleeve 76b is positioned in a position illustrated in FIG. 2 with respect to the clutch hub 76a when the shift actuator 7A is not driven. In this position, connection between the sleeve 76b and the clutch gear 75a is disconnected, and the drive sprocket 75 is allowed to rotate about the axial center C1 relative to the first output shaft 73. Since the drive sprocket 75 idles with respect to the first output shaft 73, power is not transmitted to the second output shaft 77 side through the drive sprocket 75 (two-wheel drive state). Meanwhile, when driving of the shift actuator 7A moves the sleeve 76b to the drive sprocket 75 side and causes the sleeve 76b to mesh with the clutch gear 75a, the drive sprocket 75 is prevented from rotating about the axial center C1 relative to the first output shaft 73. Accordingly, the drive sprocket 75 integrally rotates with the first output shaft 73, and power is transmitted to the second output shaft 77 side through the drive sprocket 75, the chain 79, and the driven sprocket 78 (four-wheel drive state).

### Rear Differential Device

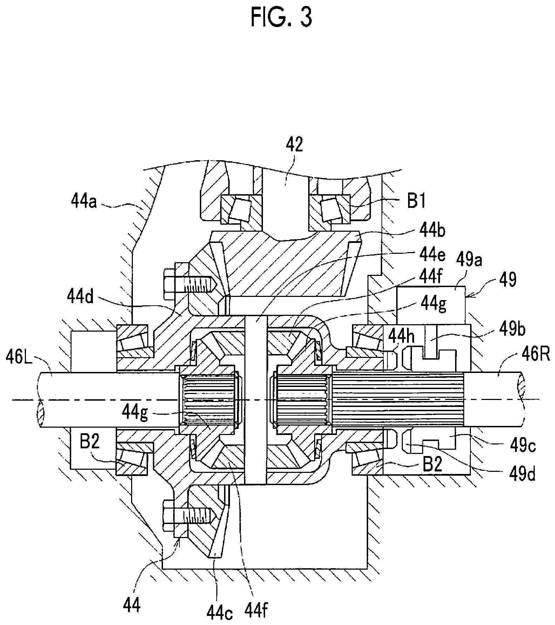

As illustrated in FIG. 3, the rear differential device 44 includes a housing 44a, a ring gear 44c that meshes with a drive pinion gear 44b, a differential case 44d, a pinion shaft 44e, pinion gears 44f rotatably mounted on the pinion shaft 44e, side gears 44g that are respectively splined to the rear wheel axles 46L, 46R and mesh with the pinion gears 44f, and a rear differential lock mechanism 49 that prevents a differential in the rear differential device 44.

The rear propeller shaft 42 is rotatably supported in the housing 44a by a tapered roller bearing B1. In addition, the drive pinion gear 44b is integrated in the rear end portion of the rear propeller shaft 42. The drive pinion gear 44b meshes with the ring gear 44c.

The ring gear 44c is fixed to the differential case 44d. The differential case 44d is rotatably supported in the housing 44a by a plurality of tapered roller bearings B2.

The pinion shaft 44e is integrated with the differential case 44d.

In the pinion shaft 44e, the pinion gears 44f are disposed to be rotatable in the circumferential direction of the pinion shaft 44e and coaxial with the pinion shaft 44e.

The internal space of the differential case 44d accommodates the side gears 44g that respectively fit with spline grooves disposed on the outer circumferential surfaces in the inner end portions of the rear wheel axles 46L, 46R.

Mesh teeth 44h are disposed on an annular surface that forms one end (right end in FIG. 3) of the differential case 44d.

The rear differential lock mechanism 49 switches between a differential lock ON state (a state of preventing operation) and a differential lock OFF state (a state of allowing operation) of the rear differential device 44 and includes a rear differential lock actuator 49a, a differential lock shift fork 49b, and a differential lock sleeve 49c.

The rear differential lock actuator 49a operates in accordance with a differential lock control signal from the 4WD-ECU 300. A rear differential lock switch 303 (refer to FIG. 1) is disposed in a vehicle cabin, and a differential lock ON signal or a differential lock OFF signal is output from the 4WD-ECU 300 to the rear differential lock actuator 49a in accordance with the driver operating the rear differential lock switch 303.

The differential lock shift fork 49b is included in the rear differential lock actuator 49a. The tip end of the differential lock shift fork 49b is engaged with a groove disposed in the differential lock sleeve 49c.

The differential lock sleeve 49c is an annular component. Projection portions having spline shapes and extending in the axial direction are formed on the inner circumferential surface of the differential lock sleeve 49c. The differential lock sleeve 49c is disposed to be movable in the axial direction of the rear wheel axle 46R and integrally rotatable with the rear wheel axle 46R by engaging of the projection portions with the spline grooves disposed on the outer circumferential surface in the inner end portion of the rear wheel axle 46R. In addition, in the differential lock sleeve 49c, mesh teeth 49d are disposed to face the mesh teeth 44h of the differential case 44d.

The rear differential device 44 is switched between a state of allowing a differential (differential lock OFF state) and a state of preventing a differential (differential lock ON state). That is, when the differential lock ON signal is output from the 4WD-ECU 300 by the driver pushing the rear differential lock switch 303, the rear differential lock actuator 49a slides the differential lock sleeve 49c to the differential case 44d side through the differential lock shift fork 49b and meshes the mesh teeth 44h with the mesh teeth 49d, thereby setting the differential lock ON state. That is, the mesh teeth 44h meshing with the mesh teeth 49d causes the differential case 44d and the rear wheel axles 46L, 46R to integrally rotate. Meanwhile, when the differential lock OFF signal is output from the 4WD-ECU 300 by the driver pushing the rear differential lock switch 303 again, the rear differential lock actuator 49a slides the differential lock sleeve 49c to the side away from the differential case 44d through the differential lock shift fork 49b and unmeshes the mesh teeth 44h and the mesh teeth 49d, thereby setting the differential lock OFF state.

### Configuration of Control System

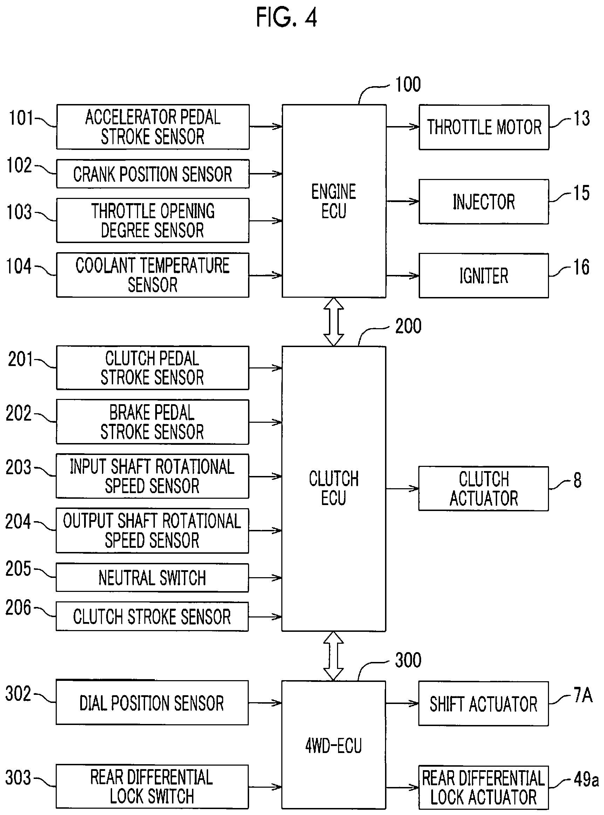

Next, a configuration of the control system related to each of the ECUs 100 to 300 will be described by using FIG. 4.

Each of the ECUs 100 to 300 includes input and output interfaces and a microcomputer that is configured with a CPU, a ROM, a RAM, and a backup RAM.

An accelerator pedal stroke sensor 101 that outputs a signal corresponding to the operation amount of an accelerator pedal 51 (refer to FIG. 1), a crank position sensor 102 that outputs a signal corresponding to the rotation angle position of a crank shaft, a throttle opening degree sensor 103 that outputs a signal corresponding to the opening degree of a throttle valve (not illustrated) included in an intake system of the engine 1, a coolant temperature sensor 104 that outputs a signal corresponding to the coolant temperature of the engine 1, and the like are connected to the input interface of the engine ECU 100.

A throttle motor 13, an injector 15, an igniter 16 of a spark plug, and the like are connected to the output interface of the engine ECU 100.

The engine ECU 100 detects the operating state of the engine 1 based on various types of information input from each sensor and controls operation of the engine 1 by, for example, controlling the throttle motor 13 (intake amount control), controlling the injector 15 (fuel injection control), and controlling the igniter 16 (spark timing control).

A clutch pedal stroke sensor 201 that outputs a signal corresponding to the operation amount of the clutch pedal 91, a brake pedal stroke sensor 202 that outputs a signal corresponding to the operation amount of a brake pedal 53, an input shaft rotational speed sensor 203 that outputs a signal corresponding to the input shaft rotational speed of the shift device 3, an output shaft rotational speed sensor 204 that outputs a signal corresponding to the output shaft rotational speed of the shift device 3, a neutral switch 205 that detects whether or not the operating position of the shift lever 32 is in a neutral position, a clutch stroke sensor 206 that detects a clutch stroke in the automatic clutch 2 (detects, for example, the sliding movement position of the release bearing of the CSC 22), and the like are connected to the input interface of the clutch ECU 200.

The clutch actuator 8 and the like are connected to the output interface of the clutch ECU 200.

A dial position sensor 302, the rear differential lock switch 303, and the like are connected to the input interface of the 4WD-ECU 300.

A drive state switching dial switch 301 (refer to FIG. 1) that the driver operates at the time of selection of one of the two-wheel drive state and the four-wheel drive state is disposed near a driving seat in the vehicle cabin. The dial position sensor 302 outputs a signal corresponding to the operating position of the drive state switching dial switch 301 to the 4WD-ECU 300. More specifically, the drive state switching dial switch 301 enables the driver to manually select one of a high-speed two-wheel drive (H-2WD) mode (a high-speed and two-wheel drive mode) in which the sub shift mechanism 72 is in the high-speed stage H in the two-wheel drive state, a high-speed four-wheel drive (H-4WD) mode (a high-speed and four-wheel drive mode) in which the sub shift mechanism 72 is in the high-speed stage H in the four-wheel drive state, and a low-speed four-wheel drive (L-4WD) mode (a low-speed and four-wheel drive mode) in which the sub shift mechanism 72 is in the low-speed stage L in the four-wheel drive state. The dial position sensor 302 outputs, to the 4WD-ECU 300, a signal corresponding to a travel mode selected with the drive state switching dial switch 301.

The rear differential lock switch 303 is a push-button switch that alternately outputs the differential lock ON signal and the differential lock OFF signal each time the driver pushes the rear differential lock switch 303. As described above, pushing the rear differential lock switch 303 outputs the differential lock ON signal and brings about a differential lock ON mode in which the rear differential lock mechanism 49 is in the differential lock ON state. In addition, pushing the rear differential lock switch 303 again outputs the differential lock OFF signal and brings about a differential lock OFF mode in which the rear differential lock mechanism 49 is in the differential lock OFF state.

Thus, each of the drive state switching dial switch 301 and the rear differential lock switch 303 corresponds to a mode switching operator referred in the invention (a mode switching operator that a driver switches at the time of selection of one travel mode of a plurality of travel modes).

The shift actuator 7A and the rear differential lock actuator 49a are connected to the output interface of the 4WD-ECU 300.

The ECUs 100 to 300 are connected to each other by a bidirectional bus in order to communicate by transmitting and receiving information for each other.

### Free Running Control

Next, a free running control that is a feature of the first embodiment will be described.

Free running is a state of coasting by disengaging the automatic clutch 2 during travel of the vehicle. The free running does not generate braking power from drag of the engine 1 (so-called engine braking) and thus can increase the distance of coasting and improve the fuel consumption rate of the engine 1. In the travel state of the free running, the engine 1 may be stopped (the rotational speed of the engine 1 is set to "zero" by stopping fuel injection from the injector 15 and stopping sparking of the spark plug), or the engine 1 may be driven (driven at approximately an idling rotational speed) (may be referred to as idle coasting). The first embodiment describes a case of free running by stopping the engine 1.

A free running initiation condition is established when a state where none of the accelerator pedal 51, the brake pedal 53, and the clutch pedal 91 are stepped on (a state where the operation amount is "zero" or approximately "zero") continues for a predetermined amount of time (for example, approximately three seconds) with the speed of the vehicle greater than or equal to a predetermined value during travel of the vehicle. In addition to this condition, the free running initiation condition may include a condition that the angle of steering is less than a predetermined angle. A free running termination condition is established when at least one of the accelerator pedal 51, the brake pedal 53, and the clutch pedal 91 is stepped on or when the speed of the vehicle is decreased to less than the predetermined value during free running. The free running termination condition may be a condition that the angle of steering is greater than or equal to the predetermined angle.

The free running corresponds to "coasting in which the connection and disconnection unit is disengaged by operation of the actuator when a predetermined coasting initiation condition is established" referred in the invention.

In the related art, free running is initiated when the free running initiation condition is established, regardless of the travel mode (the four-wheel drive mode or the two-wheel drive mode and the differential lock ON mode or the differential lock OFF mode described above). Thus, power from the engine is not transmitted to the wheels during execution of free running, and even when the driver requesting high travel performance (high rough road travel performance or high travel stability performance) selects a travel mode, the request may not be satisfied. For example, even when the four-wheel drive mode is selected in the vehicle enabling the driver to manually select one of the two-wheel drive mode and the four-wheel drive mode as described above, that is, even when the driver requests high rough road travel performance, the request may not be satisfied in free running. That is, drivability deteriorates due to execution of free running.

In view of the point, the first embodiment improves drivability for the vehicle enabling free running.

Specifically, when the drive state switching dial switch (mode switching operator) 301 is operated to select the four-wheel drive mode (a first mode referred in the invention) as a travel mode during free running performed by establishment of the free running initiation condition, that is, when the travel mode is switched from the two-wheel drive mode (a second mode referred in the invention) to the four-wheel drive mode, free running is terminated (released), and the automatic clutch 2 is placed into the engaged state from the disengaged state. When the drive state switching dial switch 301 is operated to change the travel mode to the four-wheel drive mode, free running is not initiated (not executed) even with establishment of the free running initiation condition, and the engaged state of the automatic clutch 2 is maintained. Accordingly, free running is prevented during travel in the four-wheel drive mode, and the driver can acquire high travel performance (high rough road travel performance) requested and acquire favorable drivability.

When the rear differential lock switch (mode switching operator) 303 is operated to switch the differential lock ON mode (the first mode referred in the invention) as a travel mode during free running performed by establishment of the free running initiation condition, that is, when the travel mode is switched from the differential lock OFF mode (the second mode referred in the invention) to the differential lock ON mode, free running is terminated (released), and the automatic clutch 2 is placed into the engaged state from the disengaged state. When the rear differential lock switch 303 is operated to change the travel mode to the differential lock ON mode, free running is not initiated (not executed) even with establishment of the free running initiation condition, and the engaged state of the automatic clutch 2 is maintained. Accordingly, free running is prevented during travel in the differential lock ON mode, and the driver can acquire high travel performance (high travel stability performance) requested and acquire favorable drivability.

The free running control is executed by the clutch ECU 200. Thus, a functional part of the clutch ECU 200 that executes the free running control is configured as a coasting preventing unit referred in the invention (a coasting preventing unit that performs at least one of a coasting termination control and a coasting non-execution control, the coasting termination control terminating coasting when the mode switching operator is operated to select the first mode having higher travel performance than the second mode during coasting performed by establishment of a coasting initiation condition, and the coasting non-execution control not executing coasting even with establishment of the coasting initiation condition when the mode switching operator is operated to change the travel mode to the first mode).

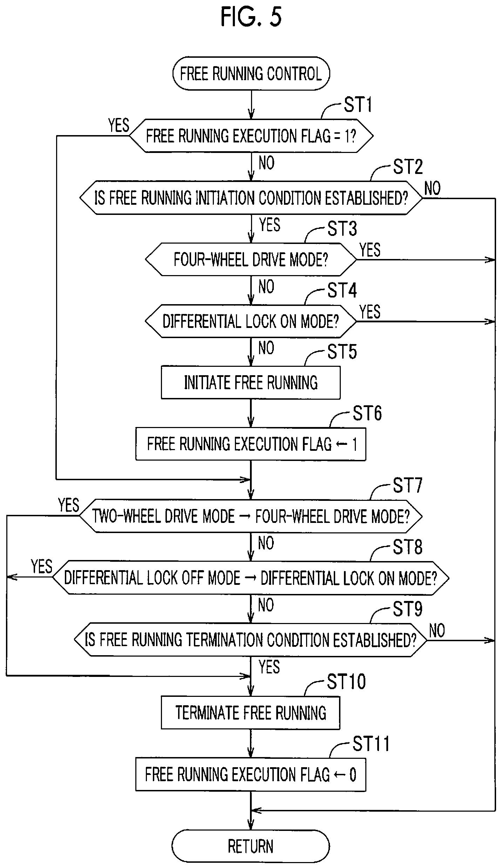

Next, a procedure of the free running control will be described with a flowchart in FIG. 5. The flowchart is repeated per predetermined amount of time during travel of the vehicle. A determination as to whether or not the vehicle is being driven is made based on the output signal of the output shaft rotational speed sensor 204. A free running execution flag described below is reset to "0" when travel is initiated immediately after the start of the engine.

First, in step ST1, a determination as to whether or not the free running execution flag stored in advance in the clutch ECU 200 is set to "1" is performed. The free running execution flag is set to "1" at the time of initiation of the free running and is reset to "0" at the time of termination (release) of the free running.

When travel of the vehicle is initiated, the free running execution flag is reset to "0". Thus, a NO determination is made in step ST1, and a transition is made to step ST2. In step ST2, a determination as to whether or not the free running initiation condition is established is performed. As described above, the free running initiation condition is established when a state where none of the accelerator pedal 51, the brake pedal 53, and the clutch pedal 91 are stepped on (a state where the operation amount is "zero" or approximately "zero") continues for a predetermined amount of time (for example, approximately three seconds) with the speed of the vehicle greater than or equal to the predetermined value during travel of the vehicle. The operation amount of the accelerator pedal 51 is acquired based on the output signal from the accelerator pedal stroke sensor 101. The operation amount of the brake pedal 53 is acquired based on the output signal from the brake pedal stroke sensor 202. The operation amount of the clutch pedal 91 is acquired based on the output signal from the clutch pedal stroke sensor 201. The speed of the vehicle is calculated based on the output signal from the output shaft rotational speed sensor 204.

When travel of the vehicle is initiated, generally, the accelerator pedal 51 is operated in order to accelerate the vehicle, or the clutch pedal 91 is operated in order to shift the shift device 3. Thus, a NO determination is made in step ST2, and a return is made. Thus, the operations of step ST1 (a NO determination in step ST1) and step ST2 (a NO determination in step ST2) are repeated until the free running initiation condition is established.

When a YES determination is made in step ST2 with establishment of the free running initiation condition, a transition is made to step ST3 in which a determination as to whether or not the current travel mode is the four-wheel drive mode is performed. That is, a determination as to whether or not the operating position of the drive state switching dial switch 301 detected based on the output signal from the dial position sensor 302 is in a four-wheel drive mode position (an H-4WD position or an L-4WD position in FIG. 1) is performed.

When the current travel mode is the four-wheel drive mode, a YES determination is made in step ST3, and a return is made. That is, a return is made without initiation of free running (with the automatic clutch 2 engaged). Even when the free running initiation condition is established in the four-wheel drive mode, the engaged state of the automatic clutch 2 is maintained, and free running is not initiated. Accordingly, free running is prevented during travel in the four-wheel drive mode, and the driver can acquire high rough road travel performance requested and acquire favorable drivability.

While the four-wheel drive mode continues, the operations of step ST1 (a NO determination in step ST1), step ST2 (a YES determination in step ST2), and step ST3 (a YES determination in step ST3) are repeated even with establishment of the free running initiation condition.

When the travel mode at the time of establishment of the free running initiation condition is the two-wheel drive mode, a NO determination is made in step ST3, and a transition is made to step ST4. In step ST4, a determination as to whether or not the current travel mode is the differential lock ON mode is performed. That is, a determination as to whether or not the travel mode is the differential lock ON mode is performed based on the output signal from the rear differential lock switch 303.

When the current travel mode is the differential lock ON mode, a YES determination is made in step ST4, and a return is made. That is, a return is made without initiation of free running (with the automatic clutch 2 not disengaged). Even when the free running initiation condition is established in the differential lock ON mode, the engaged state of the automatic clutch 2 is maintained, and free running is not initiated. Accordingly, free running is prevented during travel in the differential lock ON mode, and the driver can acquire high travel stability performance requested and acquire favorable drivability.

While the differential lock ON mode continues, the operations of step ST1 (a NO determination in step ST1), step ST2 (a YES determination in step ST2), step ST3 (a NO determination in step ST3), and step ST4 (a YES determination in step ST4) are repeated even when the free running initiation condition is established in the two-wheel drive mode.

When the travel mode at the time of establishment of the free running initiation condition is the two-wheel drive mode and the differential lock OFF mode, a NO determination is made in step ST4, and a transition is made to step ST5 in which free running is initiated. That is, the clutch disengaging instruction signal is output from the clutch ECU 200 to disengage the automatic clutch 2. In addition, the engine 1 is stopped by stopping fuel injection from the injector 15 and stopping sparking of the spark plug. Then, a transition is made to step ST6 in which the free running execution flag is set to "1".

After free running is initiated, a transition is made to step ST7 in which a determination as to whether or not the travel mode is switched from the two-wheel drive mode to the four-wheel drive mode is performed. That is, a determination as to whether or not the operating position of the drive state switching dial switch 301 detected based on the output signal from the dial position sensor 302 is switched from a two-wheel drive mode selection position (an H-2WD position in FIG. 1) to the four-wheel drive mode selection position (the H-4WD position or the L-4WD position in FIG. 1) is performed.

When a NO determination is made in step ST7 without having the travel mode switched to the four-wheel drive mode, a transition is made to step ST8 in which a determination as to whether or not the travel mode is switched from the differential lock OFF mode to the differential lock ON mode is performed. That is, a determination as to whether or not the differential lock ON mode is selected is performed based on the output signal from the rear differential lock switch 303.

When a NO determination is made in step ST8 with the differential lock ON mode not selected, a transition is made to step ST9 in which a determination as to whether or not the free running termination condition is established is performed. As described above, when the accelerator pedal 51, the brake pedal 53, or the clutch pedal 91 is stepped on, or when the speed of the vehicle is decreased to less than the predetermined value, the free running termination condition is established, and a YES determination is made in step ST9.

When a NO determination is made in step ST9 with the free running termination condition not established yet, a return is made.

In the next routine, a YES determination is made in step ST1 since the free running execution flag is set to "1" in the previous routine, and a transition is made to step ST7 in which a determination as to whether or not the travel mode is switched from the two-wheel drive mode to the four-wheel drive mode is performed as described above. The operations of steps ST1, ST7, ST8, and ST9 are repeated in a situation where the travel mode is not switched to the four-wheel drive mode, where the travel mode is not switched from the differential lock OFF mode to the differential lock ON mode in step ST8, and where the free running termination condition is not established.

When the free running termination condition is established, a YES determination is made in step ST9, and a transition is made to step ST10 in which the free running is terminated. That is, the clutch engaging instruction signal is output from the clutch ECU 200 to engage the automatic clutch 2. In addition, the engine 1 is started. The engine 1 is started by operating a starter, not illustrated, to initiate cranking of the engine 1 and by initiating supply of fuel from the injector 15 and sparking of the spark plug with the igniter 16. A target rotational speed of the engine 1 in this case is set in correspondence with the operation amount of the accelerator pedal 51 that is acquired based on the output signal from the accelerator pedal stroke sensor 101. That is, when the free running termination condition is established by stepping on the accelerator pedal 51, the target rotational speed corresponds to the amount of stepping on the accelerator pedal 51. When the free running termination condition is established by other operations, the target rotational speed is the idling rotational speed.

Then, a transition is made to step ST11 in which the free running execution flag is reset to "0", and a return is made.

When the travel mode is switched from the two-wheel drive mode to the four-wheel drive mode during the free running, a YES determination is made in step ST7, and a transition is made to step ST10. Even without having the travel mode switched to the four-wheel drive mode during the free running (a NO determination in step ST7), when the travel mode is switched from the differential lock OFF mode to the differential lock ON mode during the free running, a YES determination is made in step ST8, and a transition is made to step ST10. In step ST10, the free running is terminated as described above. In this case as well, the clutch engaging instruction signal is output from the clutch ECU 200 to engage the automatic clutch 2. In addition, the engine 1 is started. Selecting the four-wheel drive mode or selecting the differential lock ON mode during free running releases the free running and places the automatic clutch 2 from the disengaged state into the engaged state. Accordingly, when the free running is terminated by switching to the four-wheel drive mode, the driver acquires high rough road travel performance (high rough road travel performance from four-wheel drive travel) requested. When the free running is terminated by switching to the differential lock ON mode, the driver acquires high travel stability performance (high travel stability performance from differential lock ON) requested.

After the free running is terminated, a transition is made to step ST11 in which the free running execution flag is reset to "0", and a return is made.

The operations heretofore are repeated per predetermined amount of time.

By above operations performed, the above operation that results in a YES determination in step ST2 and a YES determination in step ST3 and the above operation that results in a YES determination in step ST2, a NO determination in step ST3, and a YES determination in step ST4 are included in operation of the coasting preventing unit referred in the invention and correspond to the "coasting non-execution control that does not execute coasting even with establishment of the coasting initiation condition when the mode switching operator is operated to change the travel mode to the first mode". The above operation that results in a YES termination in step ST7 and termination of the free running in step ST10 and the above operation that results in a YES determination in step ST8 and termination of the free running in step ST10 are included in operation of the coasting preventing unit referred in the invention and correspond to the "coasting termination control that terminates coasting when the mode switching operator is operated to select the first mode having higher travel performance than the second mode during coasting performed by establishment of the coasting initiation condition".

As described heretofore, in the first embodiment, when the drive state switching dial switch (mode switching operator) 301 is operated to select the four-wheel drive mode as a travel mode during free running performed by establishment of the free running initiation condition, the free running is terminated (released), and the automatic clutch 2 is placed into the engaged state from the disengaged state. When the drive state switching dial switch 301 is operated to change the travel mode to the four-wheel drive mode, free running is not initiated (not executed) even with establishment of the free running initiation condition, and the engaged state of the automatic clutch 2 is maintained. When the rear differential lock switch (mode switching operator) 303 is operated to select the differential lock ON mode as a travel mode during free running performed by establishment of the free running initiation condition, the free running is terminated (released), and the automatic clutch 2 is placed into the engaged state from the disengaged state. When the rear differential lock switch 303 is operated to change the travel mode to the differential lock ON mode, free running is not initiated (not executed) even with establishment of the free running initiation condition, and the engaged state of the automatic clutch 2 is maintained.

Accordingly, free running is prevented during travel in the four-wheel drive mode or travel in the differential lock ON mode, and the driver can acquire high travel performance (high rough road travel performance or high travel stability performance) requested. Consequently, more favorable drivability than in the related art (performing coasting by establishment of the coasting initiation condition even in a travel mode having high travel performance) can be acquired.

Specifically, the driver is highly likely to request driving in the four-wheel drive mode on an uphill road or a downhill road. In this case, when free running is executed, the vehicle may slip due to torque loss on the uphill road, or unintentional acceleration may occur due to torque loss on the downhill road (loss of negative torque as braking power from the wheels in a driven state). However, the first embodiment can avoid occurrence of such situations.

When free running is executed in the differential lock ON mode that assumes travel on a rocky road or the like, the vehicle may behave unstably due to drive power not being transmitted to the drive wheels. The first embodiment prevents free running during travel in the differential lock ON mode and thus can stabilize the behavior of the speed of the vehicle.

In the first embodiment, allowing and preventing free running are switched in accordance with the driver operating the drive state switching dial switch 301 or operating the rear differential lock switch 303. Thus, controls that reflect the intention of the driver can be performed, compared with automatic switching between allowing and preventing free running in accordance with the travel status of the vehicle, the status of the road surface, and the like.

### Second Embodiment

Hereinafter, a second embodiment of the invention will be described based on the drawings. In the first embodiment, free running is prevented when at least one of the four-wheel drive mode and the differential lock ON mode is selected. The second embodiment, instead, prevents free running when the low-speed mode in which the sub shift mechanism 72 is in the low-speed stage L is selected. Other configurations and operations are the same as in the first embodiment. Differences from the first embodiment will be described.

In the second embodiment, when the drive state switching dial switch 301 is operated to select the low-speed mode (the first mode referred in the invention) as a travel mode during free running performed by establishment of the free running initiation condition, that is, when the travel mode is switched from the high-speed mode (the second mode referred in the invention) to the low-speed mode, the free running is terminated (released), and the automatic clutch 2 is placed into the engaged state from the disengaged state. When the drive state switching dial switch 301 is operated to change the travel mode to the low-speed mode, free running is not initiated (not executed) even with establishment of the free running initiation condition, and the engaged state of the automatic clutch 2 is maintained. Accordingly, free running is prevented during travel in the low-speed mode, and the driver can acquire high travel performance (high rough road travel performance) requested and acquire favorable drivability.

The free running control is executed by the clutch ECU 200. Thus, a functional part of the clutch ECU 200 that executes the free running control is configured as the coasting preventing unit referred in the invention.

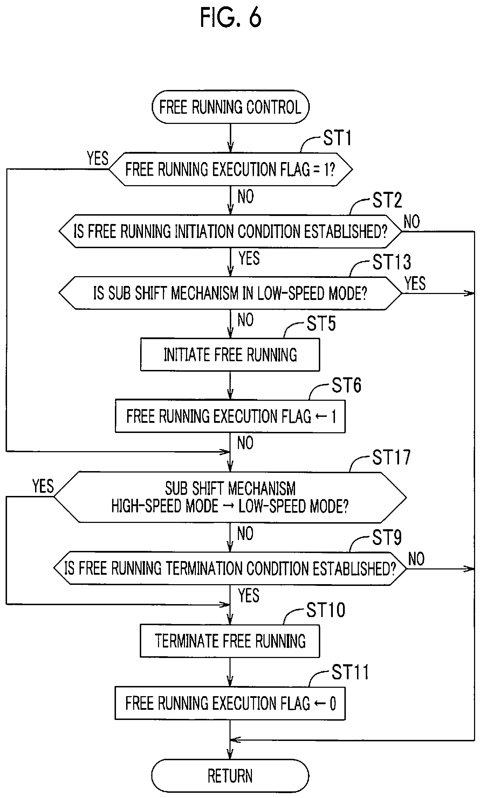

FIG. 6 is a flowchart illustrating a procedure of the free running control according to the second embodiment. The operations of steps ST1, ST2, ST5, ST6, and ST9 to ST11 in the flowchart are the same as the operations of steps ST1, ST2, ST5, ST6, and ST9 to ST11 in the flowchart illustrated in FIG. 5 in the first embodiment. Thus, the operations of these steps will not be described.

In the flowchart in FIG. 6, when a YES determination is made in step ST2 with establishment of the free running initiation condition, a transition is made to step ST13 in which a determination as to whether or not the current travel mode is the low-speed mode is performed. That is, a determination as to whether or not the operating position of the drive state switching dial switch 301 detected based on the output signal from the dial position sensor 302 is in a four-wheel drive low-speed mode position (the L-4WD position in FIG. 1) is performed.

When the current travel mode is the low-speed mode, a YES determination is made in step ST13, and a return is made. That is, a return is made without initiation of free running (with the automatic clutch 2 not disengaged). Even when the free running initiation condition is established in the low-speed mode, the engaged state of the automatic clutch 2 is maintained, and free running is not initiated. Accordingly, free running is prevented during travel in the low-speed mode, and the driver can acquire high rough road travel performance requested and acquire favorable drivability.

While the low-speed mode continues, the operations of step ST1 (a NO determination in step ST1), step ST2 (a YES determination in step ST2), and step ST13 (a YES determination in step ST13) are repeated even with establishment of the free running initiation condition.

When the travel mode at the time of establishment of the free running initiation condition is the high-speed mode, a NO determination is made in step ST13, and a transition is made to step ST5 in which free running is initiated as described above.

After free running is initiated, in step ST17, a determination as to whether or not the travel mode is switched from the high-speed mode to the low-speed mode is performed. That is, a determination as to whether or not the operating position of the drive state switching dial switch 301 detected based on the output signal from the dial position sensor 302 is switched from a high-speed mode selection position (the H-4WD position or the H-2WD position in FIG. 1) to a low-speed mode selection position (the L-4WD position in FIG. 1) is performed.

When a NO determination is made in step ST17 without having the travel mode switched to the low-speed mode, a transition is made to step ST9.

When the travel mode is switched from the high-speed mode to the low-speed mode during the free running, a YES determination is made in step ST17, and a transition is made to step ST10 in which the free running is terminated as described above. Selecting the low-speed mode during free running releases the free running and places the automatic clutch 2 from the disengaged state into the engaged state. Accordingly, when the free running is terminated by switching to the low-speed mode, the driver acquires high rough road travel performance (high rough road travel performance from travel in the low-speed mode) requested.

Other operations are the same as in the first embodiment.

By above operations performed, the above operation that results in a YES determination in step ST2 and a YES determination in step ST13 is included in operation of the coasting preventing unit referred in the invention and corresponds to the "coasting non-execution control that does not execute coasting even with establishment of the coasting initiation condition when the mode switching operator is operated to change the travel mode to the first mode". The above operation that results in a YES termination in step ST 17 and termination of the free running in step ST10 is also included in operation of the coasting preventing unit referred in the invention and corresponds to the "coasting termination control that terminates coasting when the mode switching operator is operated to select the first mode having higher travel performance than the second mode during coasting performed by establishment of the coasting initiation condition".

As described heretofore, in the second embodiment, when the drive state switching dial switch (mode switching operator) 301 is operated to select the low-speed mode as a travel mode during free running performed by establishment of the free running initiation condition, the free running is terminated (released), and the automatic clutch 2 is placed into the engaged state from the disengaged state. When the drive state switching dial switch 301 is operated to change the travel mode to the low-speed mode, free running is not initiated (not executed) even with establishment of the free running initiation condition, and the engaged state of the automatic clutch 2 is maintained.

Accordingly, free running is prevented during travel in the low-speed mode, and the driver can acquire high travel performance (high rough road travel performance) requested. Consequently, more favorable drivability than in the related art (performing coasting by establishment of the coasting initiation condition even in a travel mode having high travel performance) can be acquired.

Specifically, when the driver selects the low-speed mode, the driver is highly likely to request driving at a low speed with focus on steering. In this case, when free running is executed, the speed of the vehicle becomes unstable, and the driver may not focus on steering. The second embodiment prevents free running during travel in the low-speed mode and thus can stabilize the speed of the vehicle, and the driver can focus on steering.

### Third Embodiment

Hereinafter, a third embodiment of the invention will be described based on the drawings. The third embodiment prevents free running when a power mode is selected in a vehicle enabling selection of an eco mode, a normal mode, and a power mode as a travel mode. Other configurations and operations are the same as in the first embodiment. Differences from the first embodiment will be described.

The eco mode, the normal mode, and the power mode are travel modes having different requested torques of the engine 1 for the accelerator operation amount (the amount of stepping on the accelerator pedal 51).

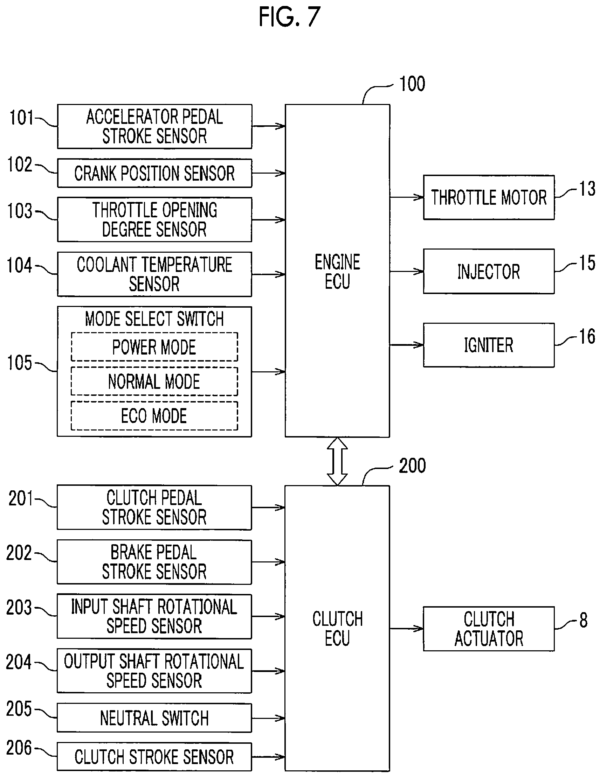

Specifically, as illustrated in FIG. 7 (a block diagram illustrating a configuration of a control system related to the engine ECU 100 and the clutch ECU 200 in the third embodiment), a mode select switch 105 is connected to the input interface of the engine ECU 100. The mode select switch 105 is a mode switching operator with which the travel mode is switched among the eco mode, the normal mode, and the power mode, and is a push-button switch, a dial switch, or the like. A mode instruction signal that corresponds to the travel mode selected by operating the mode select switch 105 is transmitted to the engine ECU 100. Accordingly, the requested torque corresponding to the accelerator operation amount is changed in correspondence with the selected travel mode.

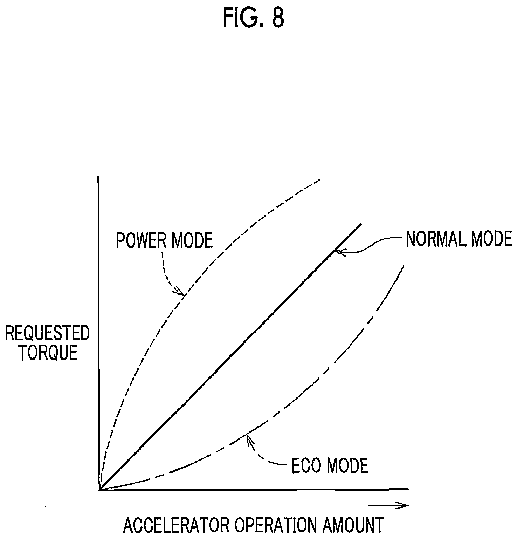

FIG. 8 is a diagram illustrating one example of a relationship between the accelerator operation amount and the requested torque for each selected travel mode. A solid line in FIG. 8 illustrates a relationship between the accelerator operation amount and the requested torque when the normal mode is selected. A broken line illustrates a relationship between the accelerator operation amount and the requested torque when the power mode is selected. A dot-dashed line illustrates a relationship between the accelerator operation amount and the requested torque when the eco mode is selected. As understood from FIG. 8, even with the same accelerator operation amount, the requested torque that is set when the power mode is selected is higher than when the normal mode is selected. Conversely, the requested torque that is set when the eco mode is selected is lower than when the normal mode is selected. Thus, the power mode is a travel mode that prioritizes output of the engine 1 more than the eco mode. The eco mode is a travel mode that prioritizes energy efficiency (fuel consumption rate) of the engine 1 more than the power mode.

A specific method of acquiring the requested torque corresponding to the travel mode is exemplified by, for example, based on FIG. 8, acquiring requested torque correction coefficients at the time of selection of the power mode and at the time of selection of the eco mode with respect to the time of selection of the normal mode (when the correction coefficient at the time of selection of the normal mode is set to "one", the correction coefficient at the time of selection of the power mode has a value greater than "one", and the correction coefficient at the time of selection of the eco mode has a value of "zero" to "one") and multiplying the requested torque acquired from a requested torque setting map at the time of selection of the normal mode by the requested torque correction coefficients, thereby acquiring the requested torque corresponding to the currently selected travel mode.

In the third embodiment, when the mode select switch 105 is operated to select the power mode (the first mode referred in the invention) as a travel mode during free running performed by establishment of the free running initiation condition, that is, when the travel mode is switched from the eco mode or the normal mode (the second mode referred in the invention) to the power mode, the free running is terminated (released), and the automatic clutch 2 is placed into the engaged state from the disengaged state. When the mode select switch 105 is operated to change the travel mode to the power mode, free running is not initiated (not executed) even with establishment of the free running initiation condition, and the engaged state of the automatic clutch 2 is maintained. Accordingly, free running is prevented during travel in the power mode, and the driver can acquire high travel performance (high response performance with respect to driving of the driver (operation of the accelerator pedal 51)) requested and acquire favorable drivability.

The free running control is executed by the clutch ECU 200. Thus, a functional part of the clutch ECU 200 that executes the free running control is configured as the coasting preventing unit referred in the invention.

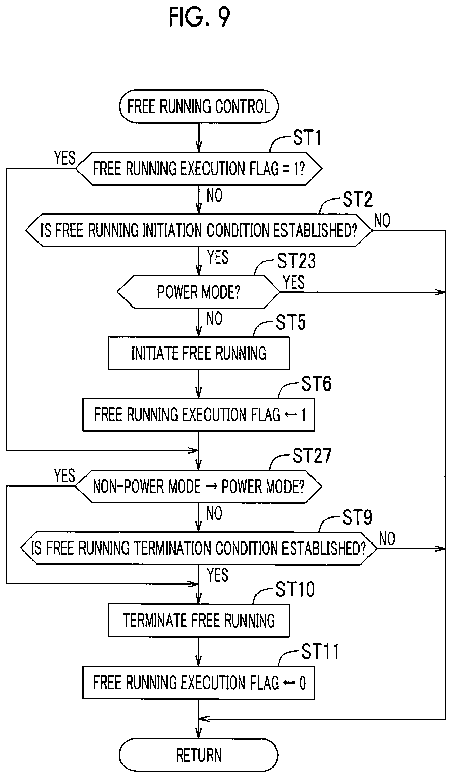

FIG. 9 is a flowchart illustrating a procedure of the free running control according to the third embodiment. The operations of steps ST1, ST2, ST5, ST6, and ST9 to ST11 in the flowchart are the same as the operations of steps ST1, ST2, ST5, ST6, and ST9 to ST11 in the flowchart illustrated in FIG. 5 in the first embodiment. Thus, the operations of these steps will not be described.

In the flowchart in FIG. 9, when a YES determination is made in step ST2 with establishment of the free running initiation condition, a transition is made to step ST23 in which a determination as to whether or not the current travel mode is the power mode is performed. That is, a determination as to whether or not the travel mode is the power mode is performed based on the output signal from the mode select switch 105.

When the current travel mode is the power mode, a YES determination is made in step ST23, and a return is made. That is, a return is made without initiation of free running (with the automatic clutch 2 not disengaged). Even when the free running initiation condition is established in the power mode, the engaged state of the automatic clutch 2 is maintained, and free running is not initiated. Accordingly, free running is prevented during travel in the power mode, and the driver can acquire high response performance requested and acquire favorable drivability.

While the power mode continues, the operations of step ST1 (a NO determination in step ST1), step ST2 (a YES determination in step ST2), and step ST23 (a YES determination in step ST23) are repeated even with establishment of the free running initiation condition.

When the travel mode at the time of establishment of the free running initiation condition is a non-power mode (the eco mode or the normal mode), a NO determination is made in step ST23, and a transition is made to step ST5 in which free running is initiated as described above.

After free running is initiated, in step ST27, a determination as to whether or not the travel mode is switched from the non-power mode to the power mode is performed. That is, a determination as to whether or not the travel mode is switched from the non-power mode to the power mode is performed based on the output signal from the mode select switch 105.

When a NO determination is made in step ST27 without having the travel mode switched to the power mode, a transition is made to step ST9.

When the travel mode is switched from the non-power mode to the power mode during the free running, a YES determination is made in step ST27, and a transition is made to step ST10 in which the free running is terminated as described above. Selecting the power mode during free running releases the free running and places the automatic clutch 2 from the disengaged state into the engaged state. Accordingly, when the free running is terminated by switching to the power mode, the driver acquires high response performance (high response performance from travel in the power mode) requested.

Other operations are the same as in the first embodiment.

By above operations performed, the above operation that results in a YES determination in step ST2 and a YES determination in step ST23 is included in operation of the coasting preventing unit referred in the invention and corresponds to the "coasting non-execution control that does not execute coasting even with establishment of the coasting initiation condition when the mode switching operator is operated to change the travel mode to the first mode". The above operation that results in a YES termination in step ST27 and termination of the free running in step ST10 is also included in operation of the coasting preventing unit referred in the invention and corresponds to the "coasting termination control that terminates coasting when the mode switching operator is operated to select the first mode having higher travel performance than the second mode during coasting performed by establishment of the coasting initiation condition".

As described heretofore, in the third embodiment, when the mode select switch (mode switching operator) 105 is operated to select the power mode as a travel mode during free running performed by establishment of the free running initiation condition, the free running is terminated (released), and the automatic clutch 2 is placed into the engaged state from the disengaged state. When the mode select switch 105 is operated to change the travel mode to the power mode, free running is not initiated (not executed) even with establishment of the free running initiation condition, and the engaged state of the automatic clutch 2 is maintained.

Accordingly, free running is prevented during travel in the power mode, and the driver can acquire high travel performance (high response performance) requested. Consequently, more favorable drivability than in the related art (performing coasting by establishment of the coasting initiation condition even in a travel mode having high travel performance) can be acquired.

Specifically, when the driver selects the power mode, the driver requests high response performance. In this case, when free running is executed, reacceleration performance deteriorates due to drive power loss. The third embodiment prevents free running during travel in the power mode and thus does not cause drive power loss and secures favorable reacceleration performance, and favorable drivability can be acquired.

### Fourth Embodiment

Hereinafter, a fourth embodiment of the invention will be described based on the drawings. The fourth embodiment prevents free running when a stop-start OFF mode is selected in a vehicle enabling selection of a stop-start ON mode and a stop-start OFF mode as a travel mode. Other configurations and operations are the same as in the first embodiment. Differences from the first embodiment will be described.

The stop-start ON mode is a travel mode in which a stoppage of the vehicle stops the engine 1. The stop-start OFF mode is a travel mode in which a stoppage of the vehicle does not stop the engine 1.

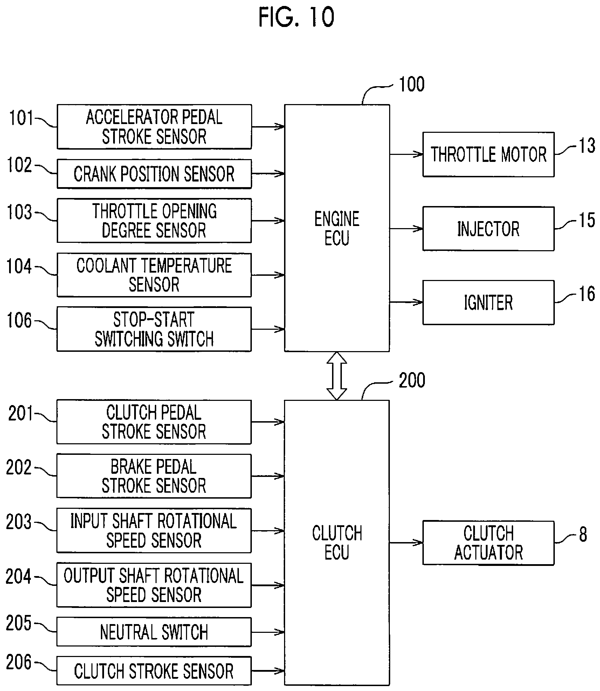

Specifically, as illustrated in FIG. 10 (a block diagram illustrating a configuration of a control system related to the engine ECU 100 and the clutch ECU 200 in the fourth embodiment), a stop-start switching switch 106 is connected to the input interface of the engine ECU 100. The stop-start switching switch 106 is a mode switching operator with which the travel mode is switched between the stop-start ON mode and the stop-start OFF mode.

In the fourth embodiment, when the stop-start switching switch 106 is operated to select the stop-start OFF mode (the first mode referred in the invention) as a travel mode during free running performed by establishment of the free running initiation condition, that is, when the travel mode is switched from the stop-start ON mode (the second mode referred in the invention) to the stop-start OFF mode, the free running is terminated (released), and the automatic clutch 2 is placed into the engaged state from the disengaged state. When the stop-start switching switch 106 is operated to change the travel mode to the stop-start OFF mode, free running is not initiated (not executed) even with establishment of the free running initiation condition, and the engaged state of the automatic clutch 2 is maintained.

When the stop-start OFF mode is selected, the driver requests the vehicle to exhibit high acceleration response performance. In this case, the driver is assumed to request high response performance with respect to driving during travel. Accordingly, free running is prevented during travel in the stop-start OFF mode, and the driver can acquire high travel performance (high response performance with respect to driving of the driver) requested and acquire favorable drivability.

The free running control is executed by the clutch ECU 200. Thus, a functional part of the clutch ECU 200 that executes the free running control is configured as the coasting preventing unit referred in the invention.

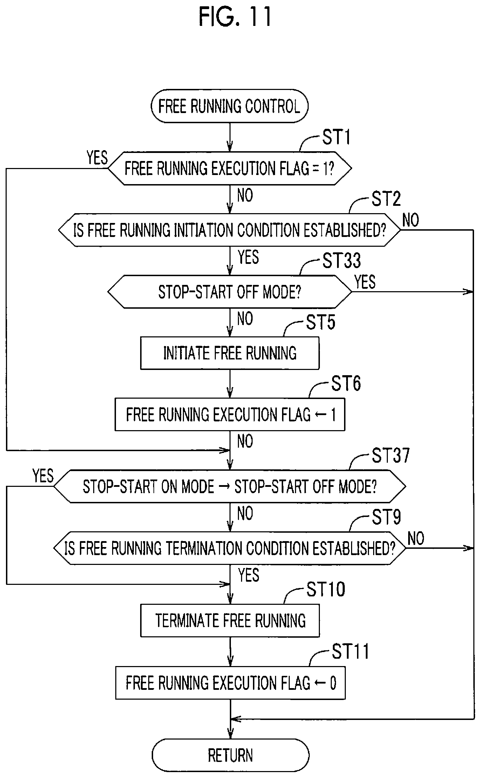

FIG. 11 is a flowchart illustrating a procedure of the free running control according to the fourth embodiment. The operations of steps ST1, ST2, ST5, ST6, and ST9 to ST11 in the flowchart are the same as the operations of steps ST1, ST2, ST5, ST6, and ST9 to ST11 in the flowchart illustrated in FIG. 5 in the first embodiment. Thus, the operations of these steps will not be described.

In the flowchart in FIG. 11, when a YES determination is made in step ST2 with establishment of the free running initiation condition, a transition is made to step ST33 in which a determination as to whether or not the current travel mode is the stop-start OFF mode is performed. That is, a determination as to whether or not the travel mode is the stop-start OFF mode is performed based on an output signal from the stop-start switching switch 106.

When the current travel mode is the stop-start OFF mode, a YES determination is made in step ST33, and a return is made. That is, a return is made without initiation of free running (with the automatic clutch 2 not disengaged). Even when the free running initiation condition is established in the stop-start OFF mode, the engaged state of the automatic clutch 2 is maintained, and free running is not initiated. Accordingly, free running is prevented during travel in the stop-start OFF mode, and the driver can acquire high response performance requested and acquire favorable drivability.

While the stop-start OFF mode continues, the operations of step ST1 (a NO determination in step ST1), step ST2 (a YES determination in step ST2), and step ST33 (a YES determination in step ST33) are repeated even with establishment of the free running initiation condition.

When the travel mode at the time of establishment of the free running initiation condition is the stop-start ON mode, a NO determination is made in step ST33, and a transition is made to step ST5 in which free running is initiated as described above.

After free running is initiated, in step ST37, a determination as to whether or not the travel mode is switched from the stop-start ON mode to the stop-start OFF mode is performed. That is, a determination as to whether or not the travel mode is switched from the stop-start ON mode to the stop-start OFF mode is performed based on an output signal from the stop-start switching switch 106.

When a NO determination is made in step ST37 without having the travel mode switched to the stop-start OFF mode, a transition is made to step ST9.

When the travel mode is switched from the stop-start ON mode to the stop-start OFF mode during the free running, a YES determination is made in step ST37, and a transition is made to step ST10 in which the free running is terminated as described above. Selecting the stop-start OFF mode during free running releases the free running and places the automatic clutch 2 from the disengaged state into the engaged state. Accordingly, when the free running is terminated by switching to the stop-start OFF mode, the driver acquires high response performance requested.

Other operations are the same as in the first embodiment.

By above operations performed, the above operation that results in a YES determination in step ST2 and a YES determination in step ST33 is included in operation of the coasting preventing unit referred in the invention and corresponds to the "coasting non-execution control that does not execute coasting even with establishment of the coasting initiation condition when the mode switching operator is operated to change the travel mode to the first mode". The above operation that results in a YES termination in step ST37 and termination of the free running in step ST10 is also included in operation of the coasting preventing unit referred in the invention and corresponds to the "coasting termination control that terminates coasting when the mode switching operator is operated to select the first mode having higher travel performance than the second mode during coasting performed by establishment of the coasting initiation condition".

As described heretofore, in the fourth embodiment, when the stop-start switching switch (mode switching operator) 106 is operated to select the stop-start OFF mode as a travel mode during free running performed by establishment of the free running initiation condition, the free running is terminated (released), and the automatic clutch 2 is placed into the engaged state from the disengaged state. When the stop-start switching switch 106 is operated to change the travel mode to the stop-start OFF mode, free running is not initiated (not executed) even with establishment of the free running initiation condition, and the engaged state of the automatic clutch 2 is maintained.

Accordingly, free running is prevented during travel in the stop-start OFF mode, and the driver can acquire high travel performance (high response performance) requested. Consequently, more favorable drivability than in the related art (performing coasting by establishment of the coasting initiation condition even in a travel mode having high travel performance) can be acquired.

Specifically, as described above, when the driver selects the stop-start OFF mode, the driver requests the vehicle to exhibit high acceleration response performance. In this case, the driver is assumed to request high response performance with respect to driving during travel. Thus, high response performance requested by the driver can be secured by preventing free running when the stop-start OFF mode is selected. Consequently, favorable drivability can be acquired.

### Other Embodiments

The invention is not limited to each of the embodiments. All modifications or applications that fall within the claims and the equivalent scope thereof can be carried out.

For example, while each of the embodiments describes the case of applying the invention to a part-time four-wheel drive car that is based on an FR vehicle, the invention can be applied to a part-time four-wheel drive car that is based on a front-engine front-drive (FF) vehicle, or to a full-time four-wheel drive car. The third embodiment and the fourth embodiment are not limited to a four-wheel drive car and can be applied to a full-time two-wheel drive vehicle. The technology of preventing free running during travel in the differential lock ON mode can be applied to a full-time two-wheel drive vehicle.

While each of the embodiments illustrates the shift device 3 as having six forward gear stages, the invention is not limited thereto, and any number of gear stages can be set. The invention can be applied to a vehicle that is equipped with an automatic transmission as the shift device 3. In this case, a friction engaging element that changes the gear ratio of the automatic shift device corresponds to the connection and disconnection unit referred in the invention. That is, in free running, power transmission between the engine and the drive wheels is blocked by disengaging the friction engaging element.

Each of the embodiments describes the case of using the gasoline engine 1 as an internal combustion engine. The invention is not limited thereto, and other internal combustion engines such as a diesel engine may be used. In the first to third embodiments, the vehicle that includes the internal combustion engine as a drive power source (conventional vehicle) may be replaced by a vehicle including the internal combustion engine and an electric motor or by an electric automobile including an electric motor.

Each of the embodiments describes the vehicle that enables execution of both of the coasting termination control and the coasting non-execution control. The invention is not limited thereto. A control device for a vehicle that enables execution of one of the coasting termination control and the coasting non-execution control falls within the technical idea of the invention.

Each of the embodiments describes the automatic clutch 2 that operates by the CSC 22. The invention is not limited thereto and can be applied to a known release fork clutch device that moves a release bearing with a release fork.

Each of the embodiments stops the engine 1 during free running. The invention is not limited thereto and may drive the engine 1 (drive at approximately the idling rotational speed) during free running.

The first embodiment performs the free running control in accordance with the differential lock ON state and the differential lock OFF state of the rear differential lock mechanism 49 included in the rear differential device 44. The invention is not limited thereto. The front differential device 43 may include a front differential lock mechanism, and the free running control may be performed in accordance with the differential lock ON state and the differential lock OFF state of the front differential lock mechanism (free running is prevented in the front differential lock ON state). Alternatively, a center differential lock device in a full-time four-wheel drive car may include a center differential lock mechanism, and the free running control may be performed in accordance with the differential lock ON state and the differential lock OFF state of the center differential lock mechanism (free running is prevented in the center differential lock ON state).

The invention can be applied to control of a vehicle that enables free running by disengaging an automatic clutch.

## Claims

1. A control device for a vehicle, the vehicle including a connection and disconnection unit (2) disposed on a power transmission path between a drive power source and drive wheels, the connection and disconnection unit (2) being configured to switch between an engaged state and a disengaged state by operation of actuators (8, 7A, 49a), transmission of power on the power transmission path being executed in the engaged state, transmission of power on the power transmission path being blocked in the disengaged state, the vehicle including a mode switching operator (301, 303; 105; 106) that is operable by a driver, the mode switching operator (301, 303; 105; 106) being configured to select one travel mode of a plurality of travel modes including a first mode and a second mode having different levels of travel performance, the control device comprising:
an electronic control unit (100; 200; 300) configured to:
control the actuators (8, 7A, 49a) to execute coasting in which the connection and disconnection unit (2) is placed into the disengaged state, when a predetermined coasting initiation condition is established, and
execute at least one of a coasting termination control and a coasting non-execution control, the coasting termination control terminating the coasting when the mode switching operator (301, 303; 105; 106) is operated to select the first mode having higher travel performance than the second mode during the coasting performed by establishment of the coasting initiation condition, and the coasting non-execution control not executing the coasting when the coasting initiation condition is established after the mode switching operator (301, 303; 105; 106) is operated to change the travel mode to the first mode.

2. The control device according to claim 1, wherein:
the vehicle includes a drive wheel switching mechanism (76) disposed on the power transmission path, the drive wheel switching mechanism (76) is configured to switch between four-wheel drive travel and two-wheel drive travel; and
the travel modes include a four-wheel drive mode performing the four-wheel drive travel and a two-wheel drive mode performing the two-wheel drive travel, the first mode is the four-wheel drive mode, and the second mode is the two-wheel drive mode.

3. The control device according to claim 1, wherein:
the vehicle includes a sub shift mechanism (72) disposed on the power transmission path of the vehicle, the sub shift mechanism (72) is configured to shift in two stages of a low-speed stage (L) and a high-speed stage (H) so as to change a gear ratio of rotation transmitted from the drive power source toward the drive wheels; and
the travel modes include a low-speed mode placing the sub shift mechanism (72) into the low-speed stage (L) and a high-speed mode placing the sub shift mechanism (72) into the high-speed stage (H), the first mode is the low-speed mode, and the second mode is the high-speed mode.

4. The control device according to claim 1, wherein:
the vehicle includes a differential device (44) disposed on the power transmission path, the differential device (44) includes a differential lock mechanism (49); and
the travel modes include a differential lock ON mode of locking differential lock mechanism (49) of the differential device (44) and a differential lock OFF mode of unlocking the differential lock mechanism (49) of the differential device (44), the first mode is the differential lock ON mode, and the second mode is the differential lock OFF mode.

5. The control device according to claim 1, wherein the travel modes include at least a power mode and an eco mode, the first mode is the power mode that prioritizes output of the drive power source more than the eco mode, and the second mode is the eco mode that prioritizes energy efficiency of the drive power source more than the power mode.

6. The control device according to claim 1, wherein:
the drive power source is an internal combustion engine (1); and
the travel modes include a stop-start ON mode of stopping the internal combustion engine (1) by a stoppage of the vehicle and a stop-start OFF mode of not stopping the internal combustion engine (1) even with a stoppage of the vehicle, the first mode is the stop-start OFF mode, and the second mode is the stop-start ON mode.
